Europäisches Patentamt

European Patent Office

Office européen des brevets

(11) Publication number: **0 213 455**
**B1**

(12) **EUROPEAN PATENT SPECIFICATION**

(45) Date of publication of patent specification: 03.01.90

(21) Application number: 86110994.0

(22) Date of filing: 08.08.86

(51) Int. Cl.⁵: **F 02 B 23/08**

(54) **TJ-jet chamber of a gasoline engine.**

(30) Priority: 08.08.85 CN 85105941

(43) Date of publication of application:
11.03.87 Bulletin 87/11

(45) Publication of the grant of the patent:
03.01.90 Bulletin 90/01

(84) Designated Contracting States:
DE FR GB IT

(56) References cited:
DE-A-2 614 595
DE-A-2 711 681
DE-A-2 718 582
DE-A-2 755 531
GB-A- 615 002
US-A-2 012 512
US-A-2 191 638
US-A-4 191 136
US-A-4 329 955

(73) Proprietor: **Tianjin University**
**No. 92 Weijin Road**
**Nan Kai District Tianjin (CN)**

(72) Inventor: **Youjun, Liu Thermophysics Eng. Dept.**
**Tianjin University**
**Tianjin (CN)**
Inventor: **Jiujing, Shang Thermophysics Eng.**
**Dept.**
**Tianjin University**
**Tianjin (CN)**
Inventor: **Yinglong, Liu Thermophysics Eng.**
**Dept.**
**Tianjin University**
**Tianjin (CN)**
Inventor: **Shinxiong, Wan Thermophysics Eng.**
**Dept.**
**Tianjin University**
**Tianjin (CN)**
Inventor: **Jieping, Liu Thermophysics Eng. Dept.**
**Tianjin University**
**Tianjin (CN)**

(74) Representative: **Lederer, Franz, Dr. et al**
**Van der Werth, Lederer & Riederer**
**Patentanwälte Lucile-Grahn-Strasse 22**
**D-8000 München 80 (DE)**

Courier Press, Leamington Spa, England.

## Description

The invention relates to a combustion chamber of a combustion engine, more particularly of the cylinder thereof. It belongs to the technical field of interval combustion engines. Combustion chambers of the kind the invention starts out from are known form DE—A 27 11 681.

A gasoline engine is a power device e.g. in a car. To optimize its performance is the premise of the optimization of the car performance. Since last century, specialists have strived to attain the aim unremittingly for this purpose. At present the compression ratio of common car-used gasoline engines, while using unleaded gasoline (RON value 90—93), is about 8,5—9,0. Their engine performance is as follows: Minimum specific fuel consumption of 268—275 g/kWh, maximum mean effective pressure of 9—9,5 · 10^5 Pa (kg/cm²). During recent decades, a great deal of research has been put into the further development of the gasoline engine. Especially outstanding among them are, as regards the combustion chamber:

1) May Fireball Chamber in Switzerland, reference is made to SAE papers, Series No 790386 and 810786;

2) British High Compression Ratio Compact Chamber produced by Ricardo Ltd. reference is made to SAE papers, Series No. 820166, and A. E. journal, Feb.—March 1982;

3) Top Chamber produced by Porsche in F. R. G., reference is made to MTZ journal, May 1984.

The following are other chambers developed in this field:

4) MCA-jet chamber developed by Mitsubishi Co in Japan, reference is made to "Automotive Engineering" journal April 1975;

5. Tornado chamber developed by Danish University, reference is made to SAE papers, series No. 810786;

6. Audi Combustion System in F. R. G., reference is made to West German "Automobil Industrie" journal, issue 1, 2, 3, 1982.

The above-mentioned three chambers are put into trial production. Their performances are superior, though these engines had to use premium gasoline (high octane number). Premium gasoline, however, in the refining process needs more energy. In view of energy preservation these former products are not ideal.

DE—A—27 11 681 (Figs. 9—11) presents a combustion chamber as defined in the prior art portion of claim 1, wherein the oblique channel providing for an accelerated spreading of the flame is a notch in the cylinder head, running from the combustion recess along the peripheral line of the cylinder top face for approximately ⅓ of the periphery. This notch, obviously, lowers the compression ratio without well guiding the flame front to its far end once the piston has started its down movement, due to its open bottom face.

The object of this invention lies in decreasing specific energy consumption in car-used gasoline engines, thereby increasing economical results and saving energy. This is accomplished by the invention as defined in claim 1, the construction of the invention leading to a powerful flame jet into the more remote part of the main chamber, without being accompanied by resultant disadvantages.

Using the lower octane number gasoline (RON 86) has proved to be possible, the leaner gas mixture being of benefit for reducing specific energy consumption. In addition, it has been proved in theory and practice that an increase in the compression ratio of the gasoline engine is possible, which is effective means to decrease the specific fuel consumption.

Generally, the compression ratio cannot be increased unlimitedly, otherwise it may cause in the engine abnormal combustion-detonations which would cause serious damage to the gasoline engine and would sharply decrease its performance. As a result of the structure of the invention, detonations inside the chamber can be depressed, the difficulties in connection with an increase of the compression ratio can be overcome and the performance of the gasoline engine can be further optimized.

In the attached drawings of an example of the invention:

Fig. 1 is a top view of the combustion chamber;

Fig. 2 is a cross section view of the chamber.

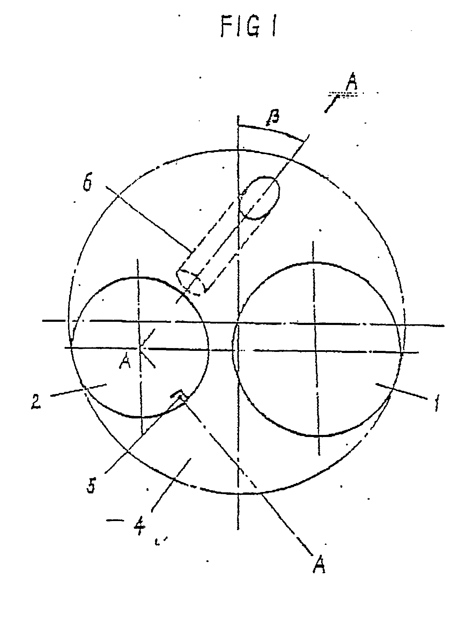

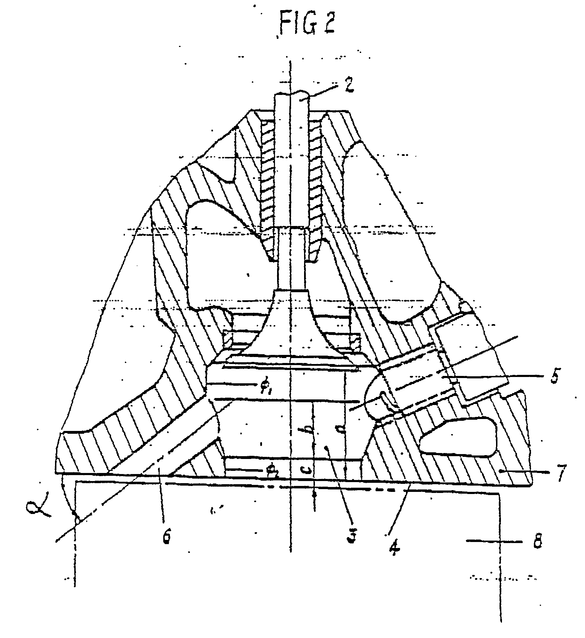

The combustion chamber of Figs. 1 and 2 comprises an intake value (1), an exhaust value (2), a combustion recess (3) comprising an upper cylindrical portion and a lower tapered portion, a clearance (4) between piston and cylinder head, a spark plug (5), at least one jet hole (6), a cylinder head (7) and a piston (8). As shown in Fig. 1 and Fig. 2, the combustion recess (3) is disposed in the cylinder head, located under the exhaust valve in the shape of a cylinder. In the side-wall, at the upper, wider diameter end of the tapered portion, there exists a special hole for the jet. The number of jet holes, their position and size are of importance for the engine performance, but all these must depend on the diameter of the cylinder and the stroke of the piston. By utilizing the upward compression of the piston (8) before burning the fuel, and the expansion of gas after burning it, a strong turbulence of different scales is formed in the combustion recess (3) and the main chamber (4). Especially, a great deal of turbulence of microscale can be produced through the jet-holes. Because of this phenomenon the flame propagation speed is greatly raised and it reaches the farthest end from the spark plug at great speed, whereby detonation is depressed. At the same time, in the later period of combustion, the rate of heat-release is extremely high. Then, a sophisticated heat-release can be achieved. If a conventional gasoline engine is changed over to the described combustion chamber with burning RON 86 gasoline, the compression ratio can be increased from 7.2 to 10, the lowest specific fuel consumption becomes 241 g/kWh and the maximum mean effective pressure is increased to 9.7 kg/cm². These data have attained world advanced level. The shape of the combustion recess (3) and the position of the spark plug, all play an active role in optimizing the performance, but the key point remain the jet holes which were special-designed. The upper end of their center is opposite the exhaust valve (2) and the lower end of their center is farthest from the spark plug. The main roles thereof are as follows:

1) Due to the compression by the piston, a great deal of turbulence of microscale is formed around the spark plug which is of benefit to the ignition;

2) The mixed gases are in ignition after the flame propagates outward through the jet holes and the flame front can be led to the region of the detonation center as to depress the detonation;

3) Inside the combustion recess (3), the higher is the compression ratio or load, the stronger becomes the intensity and the less is the size of the tubulence of microscale caused by the jet holes; therefore the more grows the propagation speed of the flame. All these functions can raise the potential of depressing detonation which conventionally occurs during a higher compression ratio and bigger load;

4) Through the jet holes, turbulence of microscale is produced inside the main chamber as soon as the flame front reaches it, so that, before the short-life turbulence of microscale disappears, they made full use thereof to raise the propagation speed of the flame greatly;

5) In the course of combustion, through the jet holes at least two separate-developed combustion regions are formed, and these increase the area of the flame front considerably during the later period of combustion. However, the combustion speed is so fast that a sophisticated heat-release pattern can be given, and simultaneously the temperature of the exhaust and heat-stress become decreased.

During the high load, as a result of fast speed of combustion the advanced angle of ignition will be reduced. With this there result some advantages:

1) It is of benefit for depressing detonation and further increasing the compression ratio;

2) The highest combustion pressure and mechanical stress can be lowered;

3) Combustion noise can be lowered;

4) $NO_x$ in the exchaust can be lowered.

By using the combustion chamber of the invention, also in the case of using low octane gasoline, compression ratio can be raised. It is possible to equip existing gasoline engines with the combustion chambers of the invention, resulting in a performance which is higher than the products of known gasoline engines, the fuel economy being just the same as with the gasoline engines with high compression ratio which have been developed recently but wherein premium gasoline of high octane number is needed. This invention can be adapted to all overhead valve engines.

The following table gives a performance comparison between gasoline engines with high compression ratio. The used embodiment is a Chinese "492Q" gasoline engine which equipped with a combustion chamber according to the invention, dimensioned as follows:

$\phi_1$ = 50 mm $\phi_2$ = 40 mm diameter of jet hole = 10 mm

a = 29,5 mm b = 15 mm c = 5,5 mm, $\alpha$ = 32° $\beta$ = 38°30'

## TABLE

### Performance Comparison Between Gasoline Engines With High Compression Ratio

| combustion chamber / parameter of performance | octane number of gasoline (RON) | compression ratio | lowest specific fuel consumption (g/kWh) | maximum means effective pressure (kg/cm² ≈ 10⁵Pa) |
|---|---|---|---|---|
| usual car-used gasoline engine | 90—93 | 8.5—9.0 | 268—275 | 9—9.5 |
| engine using the May Fireball chamber in Switzerland | 97 (high octane No gasoline) | 11 | 241 | 11.4 |
| Ricardo high compression ratio — chamber in piston | 103 | 11 | 255 | 10.1 |
| compact chamber British — chamber in cylinder head | 96 | 11 | 255 | 9.5 |
| Porsche | 98 | 10.6 | 256 | 10.3 |
| TOP chamber in F.R.G. | 92 | 9.5 | 276 | 9.4 |
| Combustion chamber of the invention | 86 | 10 | 255 | 9.7 |

EP 0 213 455 B1

**Claims**

1. A combustion chamber of an overhead-valve combustion engine, said combustion chamber being bordered by a cylinder, a piston slidably mounted in said cylinder, and a cylinder head (7) which has a bottom face defining the top of a cylinder main chamber (4), said cylinder head containing an exhaust valve (2) and an intake valve (1) being parallel to and longer than the exhaust valve (2), and enclose a combustion recess (3) located under the exhaust valve (2), and containing in a side wall of the combustion recess (3) a spark plug (5) located below the exhaust valve (2); the combustion recess (3) being partly defined by an upper cylindrical portion and an open bottom face, and communicating via its open bottom face and via at least one oblique channel (6) which extents from the side wall of the combustion recess (3) to a location remote from the spark plug (5) with the main chamber (4), characterized in that the combustion recess (3) has between said cylindrical portions and the open bottom face a tapered portion becoming smaller in diameter toward said open bottom face, and the oblique channel (6) consists of a jet hole.

2. Combustion chamber as claimed in claim 1, characterized in that the axis of the jet hole (6) is, if seen along the axis of the combustion chamber, inclined to the diameter center line of the main chamber (4) perpendicular on the common axial planes of the valves (1, 2), by an angle ($\beta$) of 37° to 40°.

3. Combustion chamber as claimed in claim 1 or 2, characterized in that the jet hole (6) is constructed so that its axis is inclined to the combustion chamber by an angle ($\alpha$) of 30° to 34° and directed towards the exhaust valve.

**Patentansprüche**

1. Brennkammer einer Brennkraftmaschine mit obenliegenden Ventilen, wobei die Brennkammer begrenzt ist durch einen Zylinder, einen gleitfähig im Zylinder montierten Kolben und einen Zylinderkopf (7), der eine Unterseite aufweist, welche eine Zylinder-Hauptkammer (4) oben begrenzt, und der ein Auspuffventil (2) und ein Ansaugventil (1), das parallel zum Auspuffventil (2) und länger als dieses ist, enthält und eine Brennmulde (3) umschließt, die unter dem Auspuffventil (2) liegt, und der in einer Seitenwand der Brennmulde (3) eine Zünderkerze (5) enthält, die unterhalb des Auspuffventils (2) angeordnet ist; und wobei die Brennmulde (3) teilweise durch einen oberren zylindrischen Teil und durch eine offene Unterseite begrenzt ist und über ihre offene Unterseite und wenigstens einen schrägen Kanal (6), der sich von der Seitenwand der Brennmulde (3) zu einem von der Zündkerze abgewandten Ort erstreckt, mit der Hauptkammer (4) kommuniziert, dadurch gekennzeichnet, daß die Brennmulde (3) zwischen den zylindrischen Teilen und der offenen Unterseite einen konischen Teil hat, dessen Durchmesser zur offenen Unterseite zu kleiner wird, und daß der schräge Kanal (6) aus einer Düsenbohrung besteht.

2. Brennkammer nach Anspruch 1, dadurch gekennzeichnet, daß die Achse der Düsenbohrung (6), entlang der Achse der Brennkammer gesehen, zu auf den gemeinsamen Axialebenen der Ventile (1, 2) senkrechten Durchmesser-Mittellinie der Hauptkammer (4) um einen Winkel ($\beta$) von 37° bis 40° geneigt ist.

3. Brennkammer nach Anspruch 1 oder 2, dadurch gekennzeichnet, daß die Düsenbohrung (6) so konstruiert ist, daß ihre Achse sur Brennkammer um einen Winkel ($\alpha$) von 30° bis 34° geneigt und zum Auspuffventil gerichtet ist.

**Revendications**

1. Chambre de combustion pour moteur à combustion du type à soupapes en tête, ladite chambre de combustion étant adjacente à un piston monté coulissant et à une culasse (7) comportant une face inférieure délimitant le sommet d'une chambre principale du cylindre (4), ladite culasse contenant une soupape d'échappement (2) et une soupape d'admission (1) parallèle à la soupape d'échappement (2) et plus longue que celle-ci et enfermant une chambre secondaire (3) de combustion située au-dessous de la soupape d'échappement (2) et contenant une bougie (5) d'allumage par étincelles dans une paroi latérale de la chambre secondaire (3), cette bougie (5) étant située au-dessous de la soupape d'échappement (2), la chambre secondaire (3) de combustion étant partiellement délimitée par une partie cylindrique supérieure et une face inférieure ouverte et communiquant avec la chambre principale (4) par sa face inférieure ouverte et par au moins un conduit oblique (6) qui s'étend depuis la paroi latérale de la chambre secondaire (3) de combustion jusqu'à un point éloigné de la bougie d'allumage (5); et de la chambre principale (4), caractérisée en ce que la chambre secondaire (3) de combustion comporte entre ladite partie cylindrique et la face inférieure ouverte, une partie convergente dont le diamètre diminue vers ladite face inférieure ouverte, le conduit oblique (6) consistant en un trou de jet.

2. Chambre de combustion suivant la revendication 1, caractérisée en ce que l'axe du trou (6) de jet, considéré le long de l'axe de la chambre de combustion, est incliné vers l'axe diamétral de la chambre principale (4) perpendiculairement aux plans axiaux communs des soupapes (1, 2) d'un angle ($\beta$) de 37° à 40°.

3. Chambre de combustion suivant la revendication 1 ou 2, caractérisée en ce que le trou de jet (6) est réalisé de façon que son axe soit incliné sur la chambre de combustion d'un angle ($\alpha$) de 30° à 34° et dirigé vers la soupape d'échappement.

FIG 1

FIG 2